# EUROPÄISCHE PATENTSCHRIFT

(11) **EP 3 243 082 B1**
(45) Veröffentlichungstag und Bekanntmachung des Hinweises auf die Patenterteilung: **21.11.2018**
(21) Anmeldenummer: 16700096.7
(22) Anmeldetag: 04.01.2016
(51) Int. Cl.: G01P 21/00, G01P 15/08, G01P 15/125, G01P 15/13

(54) **BESCHLEUNIGUNGSSENSOR MIT REDUZIERTEM BIAS UND HERSTELLUNGSVERFAHREN EINES BESCHLEUNIGUNGSSENSORS**
ACCELERATION SENSOR HAVING REDUCED BIAS AND MANUFACTURING METHOD FOR AN ACCELERATION SENSOR
CAPTEUR D'ACCÉLÉRATION À POLARISATION RÉDUITE ET PROCÉDÉ DE FABRICATION D'UN CAPTEUR D'ACCÉLÉRATION

(30) Priorität: 05.01.2015 DE 102015000158
(43) Veröffentlichungstag der Anmeldung: 15.11.2017
(73) Patentinhaber: Northrop Grumman LITEF GmbH, 79115 Freiburg (DE)
(72) Erfinder: LEINFELDER, Peter, 79238 Ehrenkirchen (DE)
(74) Vertreter: Müller Hoffmann & Partner
(86) Internationale Anmeldenummer: PCT/EP2016/050014
(87) Internationale Veröffentlichungsnummer: WO 2016/110460

(56) Entgegenhaltungen:
- DE-A1- 10 148 858
- DE-A1-102013 208 688
- US-A- 5 817 942
- JIANG T ET AL: "PARTICULATE FAILURES FOR SURFACE-MICROMACHINED MEMS", PROCEEDINGS INTERNATIONAL TEST CONFERENCE 1999. ITC'99. ATLANTIC CITY, NJ, SEPT. 28 - 30, 1999; [INTERNATIONAL TEST CONFERENCE], NEW YORK, NY : IEEE, US, Bd. CONF. 30, 1. September 1999 (1999-09-01), Seiten 329-337, XP000928850, ISBN: 978-0-7803-5754-9

## Beschreibung

Die Erfindung bezieht sich auf einen Beschleunigungssensor mit reduziertem Bias und ein Herstellungsverfahren für einen Beschleunigungssensor mit reduziertem Bias.

In verschiedenen Anwendungen kommen im Stand der Technik Beschleunigungssensoren zum Messen von Beschleunigungen zum Einsatz. Dabei ist häufig von Bedeutung, dass die Beschleunigungssensoren nur eine geringe Größe aufweisen. Es werden deshalb miniaturisierte Beschleunigungssensoren verwendet. Dabei kann es sich z.B. um mikro-elektro-mechanische Systeme (MEMS) handeln.

Die Beschleunigungssensoren arbeiten dabei nach dem Prinzip, dass die Auslenkung einer entlang einer Achse beweglichen Masse über Elektrodenpaare erfasst wird, deren eine Elektrode fest mit der Masse verbunden ist, wohingegen die andere Elektrode feststehend ist. Durch die Änderung des elektrischen Feldes zwischen den Elektroden kann der zeitliche Verlauf der Bewegung der Masse erfasst werden. Dies erlaubt, die auf die Masse wirkenden Beschleunigungen zu errechnen und dadurch die auf das Gesamtsystem wirkende Beschleunigung zu bestimmen.

Typischerweise weist ein Beschleunigungssensor eine Mehrzahl von Elektrodenpaaren auf, deren eine Elektrode an verschiedenen Positionen der Masse angeordnet ist. Um eine verlässliche und genaue Beschleunigungsmessung zu gewährleisten, ist es notwendig, die durch die Elektroden erzeugten elektromagnetischen Kräfte genau kontrollieren zu können. Dazu ist es notwendig, die Spaltabstände der Elektrodenpaare zu kennen. Diese können jedoch herstellungsbedingten Schwankungen unterliegen.

Werden die Beschleunigungssensoren durch Ätzen eines Substrats mittels einer Ätzmaske hergestellt, besteht das Problem, dass die Ätzflüssigkeit ungleich auf dem Substrat verteilt werden kann, z.B. durch Verlaufen der Ätzflüssigkeit. So kann es beim Ätzen zu einer leichten Schieflage eines zu ätzenden Substrats, etwa eines Si-Wafers, kommen, wodurch sich die Ätzflüssigkeit ungleichmäßig auf dem Substrat verteilt. In den durch die Schieflage tiefer liegenden Bereichen des Substrats kann sich mehr Ätzflüssigkeit ansammeln als in den höher liegenden Bereichen. Dadurch wird in den tiefer liegenden Bereichen mehr Material entfernt als in den höheren Bereichen. Dies kann zu einer unterschiedlichen Spaltbreite oder Spalttiefe der einzelnen auf dem Substrat geätzten Elektrodenpaare führen. Dieser Effekt der variierenden Spaltabstände aufgrund verlaufender Ätzflüssigkeit wird mit "Trending" bezeichnet.

Dadurch entstehen herstellungstechnisch schwierig zu kontrollierende Abweichungen der Ätztiefen und Ätzbreiten innerhalb eines Beschleunigungssensors. Aufgrund dieser unterschiedlichen Ätztiefen und Ätzbreiten kann der Spaltabstand von einzelnen Elektrodenpaaren eines Beschleunigungssensors über die Fläche des Beschleunigungssensors variieren. Dadurch üben die Elektrodenpaare bei gleichem Spannungsabfall über die einzelnen Elektrodenpaare unterschiedliche Kräfte auf die Masse aus, wodurch es zu einer Verzerrung (Bias) der Messergebnisse kommen kann.

Die DE 10 2013 208 688 A1 offenbart eine Sensiereinrichtung für eine mikromechanische Sensorvorrichtung, die aufweist: eine entlang einer Sensierrichtung bewegliche seismische Masse; und wenigstens ein orthogonal zur Sensierrichtung an einer Seite der seismischen Masse angeordnetes Sensierelement; gekennzeichnet durch wenigstens jeweils eine orthogonal zum Sensierelement an gegenüberliegenden Seitenflächen der seismischen Masse angeordnete Kammelektrode; wobei an die wenigstens zwei Kammelektroden jeweils eine konstante elektrische Kompensationspannung zum Kompensieren eines mechanischen Offsets des Sensierelements anlegbar ist.

Die DE 101 48 858 A1 offenbart einen mikromechanischen Sensor mit einem Substrat mit einer darauf befindlichen Strukturschicht; einer unter einer Federkraft relativ zur Strukturschicht beweglichen seismischen Masse; wenigstens einer Messkondensatorelektrodenanordnung zum Erfassen einer Verlagerung der seismischen Masse in einer Messrichtung und wenigstens einer Antriebskondensatorelektrodenanordnung zum Auslenken der seismischen Masse in eine Selbsttestrichtung; wobei die Messrichtung senkrecht zur Selbsttestrichtung ausgerichtet ist, sowie ein entsprechendes Optimierungsverfahren.

Die US 5 817 942 A offenbart einen Beschleunigungssensor mit Sensorelektroden an einer Sensormasse, die mit Anregeelektroden verzahnt sind. Die Paarungen von Sensorelektroden und Anregeelektroden sind geeignet Bewegungen der Sensormasse in einer Anregerichtung sowohl zu detektieren als auch anzuregen.

Der vorliegenden Erfindung liegt die Aufgabe zugrunde, einen Beschleunigungssensor und ein Verfahren zur Herstellung eines Beschleunigungssensors mit reduziertem Bias anzugeben.

Die Aufgabe wird gelöst durch den Gegenstand der unabhängigen Patentansprüche. Weiterbildungen sind durch die abhängigen Patentansprüche definiert. Ein Beschleunigungssensor weist auf: eine Anregemasse mit Anregeelektroden, die entlang einer Bewegungsachse beweglich über einem Substrat gelagert ist; Detektionselektroden, die fest mit dem Substrat verbunden sind und die den Anregeelektroden zugeordnet sind. Hierbei ist eine erste Gruppe von Paarungen von Anregeelektroden und zugeordneten Detektionselektroden geeignet, die Anregemasse entlang der Bewegungsachse in eine erste Richtung auszulenken, und eine zweite Gruppe von Paarungen von Anregeelektroden und zugeordneten Detektionselektroden ist geeignet, die Anregemasse entlang der Bewegungsachse in eine der ersten Richtung entgegengesetzte zweite Richtung auszulenken. Die Anzahl der Paarungen in der ersten Gruppe ist gleich der Anzahl der Paarungen in der zweiten Gruppe. Der gemittelte Abstand zwischen Anregeelektroden und Detektionselektroden der Paarungen der ersten Gruppe entspricht dem gemittelten Abstand zwischen Anregeelektroden und Detektionselektroden der Paarungen der zweiten Gruppe.

Ein Verfahren zur Herstellung eines Beschleunigungssensors weist die Schritte auf: Formen einer entlang einer Bewegungsachse beweglich über einem Substrat gelagerten Anregemasse mit Anregeelektroden; Formen von fest mit dem Substrat verbundenen und den Anregeelektroden zugeordneten Detektionselektroden. Hierbei weisen diese Schritte auf: Formen einer ersten Gruppe von Paarungen von Anregeelektroden und zugeordneten Detektionselektroden, die geeignet ist, die Anregemasse entlang der Bewegungsachse in eine erste Richtung auszulenken und Formen einer zweite Gruppe von Paarungen von Anregeelektroden und zugeordneten Detektionselektroden, die geeignet ist, die Anregemasse entlang der Bewegungsachse in eine der ersten Richtung entgegengesetzte zweite Richtung auszulenken, wobei die Anzahl der Paarungen in der ersten Gruppe gleich der Anzahl der Paarungen in der zweiten Gruppe ist; Einstellen des gemittelten Abstands zwischen Anregeelektroden und Detektionselektroden der Paarungen der ersten Gruppe derart, dass er dem gemittelten Abstand zwischen Anregeelektroden und Detektionselektroden der Paarungen der zweiten Gruppe entspricht.

Die erste Gruppe von Paarungen von Anregeelektroden und Detektionselektroden lenkt die Anregemasse entlang der Bewegungsrichtung in eine erste Richtung aus, während die zweite Gruppe von Paarungen von Anregeelektroden und Detektionselektroden die Anregemasse in die entgegengesetzte Richtung auslenkt. Um einen Bias zu verhindern, muss die durch die Paarungen der ersten Gruppe ausgeübte Kraft gleich der durch die Elektrodenpaarungen der zweiten Gruppe ausgeübten Kraft sein. Dies wird dadurch erreicht, dass die den Betrag der Kraft bestimmenden Abstände zwischen den Anregeelektroden und Detektionselektroden der Paarungen in der ersten Gruppe und der Paarungen in der zweiten Gruppe derart eingestellt sind, dass der aus den Einzelabständen ermittelte gemittelte Abstand der ersten Gruppe und der zweiten Gruppe sich entspricht.

Der Raum zwischen den Anregeelektroden und den Detektionselektroden kann dabei die Form eines dünnen Spaltes oder Schlitzes aufweisen, der eine näherungsweise rechteckige Fläche aufweist. In erster Näherung ergibt sich der Abstand zwischen einer Anregeelektrode und der zugehörigen Detektionselektrode aus dem Integral über die zwischen den beiden Elektroden liegende Fläche, das durch die Länge der Überlappung der Elektroden geteilt wird. Für exakt rechteckige Zwischenräume zwischen den Elektroden ist dies gerade die Entfernung zwischen den Elektroden. Der gemittelte Abstand wird dann mittels Integration über die Flächen der einzelnen Elektrodenpaare, die Summierung der so gewonnenen Einzelabstände und Teilen der Summe durch die Anzahl von Paarungen bestimmt.

Der gemittelte Abstand der Paarungen der ersten Gruppe kann zum Beispiel gleich dem gemittelten Abstand der Paarungen der zweiten Gruppe sein. Dadurch wird auch die Kraft, die durch die Paarungen der ersten Gruppe auf die Anregemasse ausgeübt wird, gleich der Kraft, die durch die Paarungen der zweiten Gruppe ausgeübt wird. Eine Verzerrung der Messergebnisse und damit das Auftreten eines Bias kann somit reduziert oder ganz vermieden werden. Die gemittelten Abstände der Paarungen der ersten Gruppe und der gemittelte Abstand der Paarungen der zweiten Gruppe kann aber auch nur annähernd gleich sein, d.h. er unterscheidet sich nur um einen bestimmten Bruchteil. Auch dadurch kann der Bias wesentlich reduziert werden.

Die erste Gruppe kann wenigstens zwei Untergruppen von Paarungen aufweisen, und die zweite Gruppe kann wenigstens zwei Untergruppen von Paarungen aufweisen, wobei in den Untergruppen Anregeelektroden und Detektionselektroden abwechselnd angeordnet sind. Dies erleichtert die Fertigung des Beschleunigungssensors, da innerhalb der Untergruppen der ersten Gruppe und der zweiten Gruppe die Paarungen von Anregeelektroden und Detektionselektroden nebeneinander angeordnet sind und sich Elektrodenpaarungen der ersten Gruppe und der zweiten Gruppe nicht abwechseln. Anders ausgedrückt sind in einer Untergruppe Paarungen von Anregeelektroden und Detektionselektroden einer Gruppe nebeneinander angeordnet. Es kann also bei der Fertigung des Beschleunigungssensors jeweils eine Untergruppe von Paarungen gefertigt werden, die die Anregemasse in die gleiche Richtung auslenken.

Eine virtuelle erste Verbindungslinie zwischen Mittelpunkten der wenigstens zwei Untergruppen der ersten Gruppe kann eine virtuelle zweite Verbindungslinie zwischen Mittelpunkten der wenigstens zwei Untergruppen der zweiten Gruppe kreuzen. Die Mittelpunkte der Untergruppen sind hierbei als die Mittelpunkte der kleinsten Rechtecke definiert, die sämtliche Elektroden der jeweiligen Untergruppe einschließen.

Dadurch wird gewährleistet, dass die Elektroden, die eine Bewegung der Anregemasse in die erste Richtung erzeugen, überkreuz zu den Elektroden liegen, die eine Bewegung der Anregemasse in die zweite Richtung erzeugen. So ist sichergestellt, dass bei Fertigungsverfahren, in denen unterschiedliche Spaltabstände zwischen den Elektroden durch verlaufende Ätzflüssigkeit, d.h. durch Trending, hervorgerufen werden, der gemittelte Abstand der Paarungen der ersten Gruppe gleich dem gemittelten Spaltabstand der Paarungen der zweiten Gruppe ist.

Das Verlaufen der Ätzflüssigkeit rührt von einer Schrägstellung des zu ätzenden Substrats, etwa eines Si-Wafers, her, wobei die Neigung des Substrats dazu führt, dass sich die Ätzflüssigkeit in ungleicher Höhe über dem Substrat sammelt. Die Höhe der Ätzflüssigkeit ändert sich jedoch nicht sprunghaft, sondern folgt einem linearen Gradienten. Dadurch ist in einem Beschleunigungssensor, in dem die Elektrodenpaarungen der ersten Gruppe überkreuz zu den Elektrodenpaarungen der zweiten Gruppe angeordnet sind, automatisch gewährleistet, dass sich die durch die unterschiedliche Höhe der Ätzflüssigkeit hervorgerufenen Unterschiede in den Spaltbreiten herausmitteln. Die Fertigung von Beschleunigungssensoren mit reduziertem Bias wird dadurch erheblich vereinfacht, so dass die Kosten reduziert werden.

An einer zur Bewegungsachse parallelen ersten Seite der Anregemasse können entlang der ersten Richtung nacheinander wenigstens zwei Anregeelektroden der ersten Gruppe und wenigstens zwei Anregeelektroden der zweiten Gruppe angeordnet sein. Entlang einer zur Bewegungsachse parallelen zweiten Seite der Anregemasse können entlang der ersten Richtung nacheinander wenigstens zwei Anregeelektroden der zweiten Gruppe und wenigstens zwei Anregeelektroden der ersten Gruppe angeordnet sein. Hierbei können die zwei an der ersten Seite der Anregemasse angeordneten Anregeelektroden der ersten Gruppe gegenüber den zwei an der zweiten Seite der Anregemasse angeordneten Anregeelektroden der zweiten Gruppe liegen. Dadurch ist eine spezielle Form des Beschleunigungssensors bestimmt, in dem die Anregeelektroden der ersten Gruppe überkreuz zu den Anregeelektroden der zweiten Gruppe angeordnet sind. Dadurch wird eine Fertigung des Beschleunigungssensors mit reduziertem Bias aus den oben genannten Gründen erleichtert.

Die Anregeelektroden und Detektionselektroden können Kammelektroden mit Elektrodenfingern entlang der Bewegungsachse aufweisen, wobei die Elektrodenfinger der Anregeelektroden der ersten Gruppe sich entlang der ersten Richtung erstrecken, die Elektrodenfinger der Detektionselektroden der ersten Gruppe sich entlang der zweiten Richtung erstrecken, die Elektrodenfinger der Anregeelektroden der zweiten Gruppe sich entlang der zweiten Richtung erstrecken und die Elektrodenfinger der Detektionselektroden der zweiten Gruppe sich entlang der ersten Richtung erstrecken. Hierbei ist der Abstand zwischen Anregeelektroden und Detektionselektroden durch den Abstand zwischen den Elektrodenfingern der jeweiligen Anregeelektroden und Detektionselektroden bestimmt.

Dadurch wird gewährleistet, dass die Paarungen von Anregeelektroden und Detektionselektroden der ersten Gruppe die Anregemasse in die die erste Richtung auslenken und die Paarungen von Anregeelektroden und Detektionselektroden der zweiten Gruppe die Anregemasse in die zweite Richtung auslenken. Durch die Verzahnung der Elektrodenfinger der Anregeelektroden und der Detektionselektroden ist die Auslenkung bei im Verhältnis zur Länge der Elektrodenfinger kleinen Auslenkungen, wie sie typischerweise beim Betrieb von Beschleunigungssensoren auftreten, unabhängig von der Auslenkung. Dadurch lässt sich die Beschleunigung einfacher und verlässlicher messen. Zudem erlaubt die Ausbildung der Elektroden als Kammelektroden mit Elektrodenfingern entlang der Bewegungsachse, die Anregemasse auszulenken, ohne ungewünschte Effekte auf das Schwingungssystem der Anregemasse zu erzeugen, wie etwa eine Veränderung der Federhärte des Schwingungssystems durch elektromagnetische Wechselwirkungen.

Alternativ können die Paarungen von Anregeelektroden und Detektionselektroden Plattenkondensatoren bilden. Dadurch wird die Fertigung des Beschleunigungssensors vereinfacht.

Der Beschleunigungssensor kann eine mikro-elektro-mechanische Struktur (MEMS) sein. Damit werden die oben genannten Vorteile für einen mikro-elektromechanischen Beschleunigungssensor zugänglich.

Diese und weitere Vorteile und Merkmale der Erfindung werden nachfolgend anhand von Beispielen unter Zuhilfenahme der begleitenden Figuren näher erläutert. Es zeigen:
- **Fig. 1**: ein schematisches Blockdiagramm eines Beschleunigungssensors gemäß einer Ausführungsform;
- **Fig. 2**: ein schematisches Blockdiagramm eines Beschleunigungssensors gemäß einer weiteren Ausführungsform;
- **Fig. 3**: ein schematisches Blockdiagramm eines Beschleunigungssensors gemäß einer weiteren Ausführungsform;
- **Fig. 4**: ein schematisches Blockdiagramm eines Beschleunigungssensors gemäß einer weiteren Ausführungsform; und
- **Fig. 5**: ein schematisches Flussdiagramm eines Verfahrens zur Herstellung eines Beschleunigungssensors gemäß einer Ausführungsform.

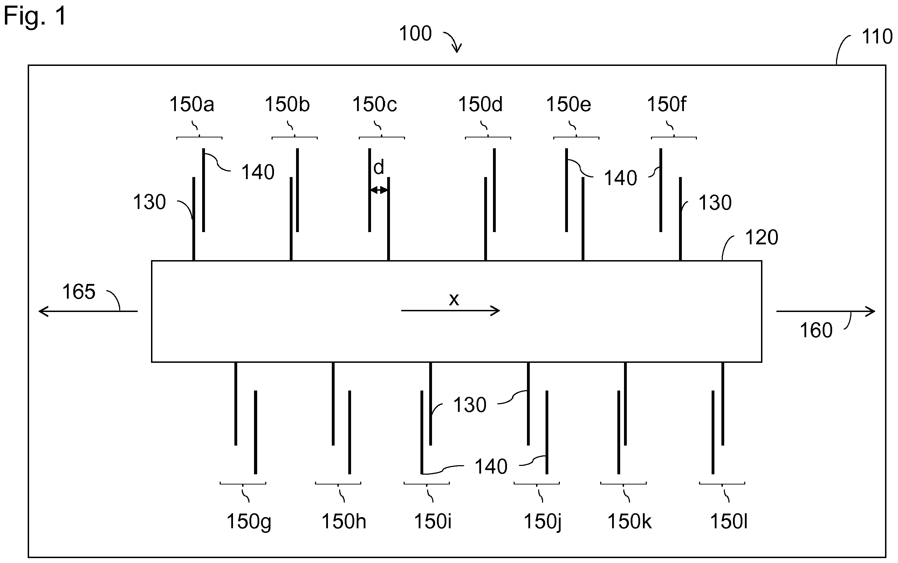

Fig. 1 zeigt einen Beschleunigungssensor 100 gemäß einer Ausführungsform.

Der Beschleunigungssensor 100 weist ein Substrat 110 auf, über dem eine Anregemasse 120 mit Anregeelektroden 130 derart gelagert ist, dass sie entlang einer Bewegungsachse x beweglich ist. Die Anregemasse 120 kann zum Beispiel mittels nicht dargestellten Federelementen, die über Ankerstrukturen mit dem Substrat 110 verbunden sind, beweglich gelagert sein. Die Bewegungsachse x liegt dann in einer Richtung, in der die Federelemente verformbar sind. Die Federelemente können zum Beispiel nur in eine Richtung verformbar sein, während sie in andere Richtungen steif sind.

Auf dem Substrat 110 sind Detektionselektroden 140 angeordnet, die fest mit dem Substrat 110 verbunden sind. Jede der Detektionselektroden 140 ist einer Anregeelektrode 130 zugeordnet und bildet mit ihr eine Paarung 150. Die einer einzelnen Anregeelektrode 130 nächstgelegene Detektionselektrode 140 ist hierbei der betreffenden Anregeelektrode 130 zugeordnet.

Je nach der Position der Detektionselektroden 140 zur zugeordneten Anregeelektrode 130 und des elektrischen Potentialunterschieds zwischen den Elektroden erzeugt jede Elektrodenpaarung 150 eine Kraft auf die Anregemasse 120. In Fig. 1 erzeugen die Paarungen 150a, 150b, 150d, 150g, 150h, 150j, bei denen die Detektionselektrode 140 rechts von der Anregeelektrode 130 angeordnet ist, eine Kraft auf die Anregemasse 120, die die Anregemasse 120 entlang einer ersten Richtung 160 (in Fig. 1 nach rechts) auslenkt. Die Paarungen 150a, 150b, 150d, 150g, 150h, 150j bilden eine erste Gruppe von Paarungen.

Die Paarungen 150c, 150e, 150f, 150i, 150k, 150l, bei denen die Detektionselektrode 140 links von der Anregeelektrode 130 angeordnet ist, erzeugen eine Kraft, die die Anregemasse 120 entlang einer der ersten Richtung 160 entgegengesetzten zweiten Richtung 165 (in Fig. 1 nach links) auslenkt. Die Paarungen 150c, 150e, 150f, 150i, 150k, 150l bilden eine zweite Gruppe von Paarungen. Die erste Richtung 160 und die zweite Richtung 165 liegen hierbei beide auf der Bewegungsachse x, entlang derer sich die Anregemasse 120 bewegen lässt.

Damit die resultierende Kraft entlang der ersten Richtung 160 in erster Näherung der resultierenden Kraft entlang der zweiten Richtung 165 entspricht, ist die Anzahl der Paarungen 150a, 150b, 150d, 150g, 150h, 150j in der ersten Gruppe gleich der Anzahl der Paarungen 150c, 150e, 150f, 150i, 150k, 150l in der zweiten Gruppe.

Ein Abstand d zwischen den Anregeelektroden 130 und den Detektionselektroden 140 der Paarungen 150 kann für jede der Paarungen 150 unterschiedlich sein. Deshalb übt jede Paarung 150 eine von dem Abstand d zwischen der Detektionselektrode 140 und der Anregeelektrode 130 abhängige, unterschiedliche Kraft auf die Anregemasse 120 aus. Wie in Fig. 1 schematisch dargestellt, ist jedoch der gemittelte Abstand der Paarungen 150a, 150b, 150d, 150g, 150h, 150j von Anregeelektroden 130 und Detektionselektroden 140 der ersten Gruppe gleich dem gemittelten Abstand der Paarungen 150c, 150e, 150f, 150i, 150k, 150l von Anregeelektroden 130 und Detektionselektroden der zweiten Gruppe. Dadurch wird die Kraft, die von der ersten Gruppe auf die Anregemasse 120 ausgeübt wird, gleich der Kraft, die von der zweiten Gruppe auf die Anregemasse 120 ausgeübt wird. Dadurch wird eine Verzerrung des Messergebnisses aufgrund von unterschiedlichen Abständen d der Paarungen 150 vermieden und es tritt kein Bias auf.

Die Abstände d zwischen den Anregeelektroden 130 und den Detektionselektroden 140 sind in der schematischen Fig. 1 zur besseren Verdeutlichung sehr unterschiedlich dargestellt. Zudem variieren die Abstände d in der Fig. 1 im Wesentlichen zufällig. Gemäß einer weiteren Ausführungsform sind die Abstände d zwischen den Elektroden möglichst gleich und variieren nur sehr wenig. Zudem ist typischerweise ein Verlauf von kleinen zu großen Abständen entlang einer bestimmten Richtung vorhanden. So können z.B. die Abstände zwischen den Elektroden in der linken unteren Ecke der Fig. 1 klein sein und in Richtung auf die rechte obere Ecke zunehmen. Die Abstände können aber auch in jeder anderen Richtung in der Ebene der Figur 1 zunehmen.

Alternativ entspricht der gemittelte Abstand der ersten Gruppe dem gemittelten Abstand der zweiten Gruppe, d.h. die gemittelten Abstände sind nicht exakt gleich, sondern aufgrund von Fertigungstoleranzen nahezu gleich. Dann wird ein Bias nicht komplett vermieden, aber der Beschleunigungssensor 100 weist wenigstens einen stark reduzierten Bias auf.

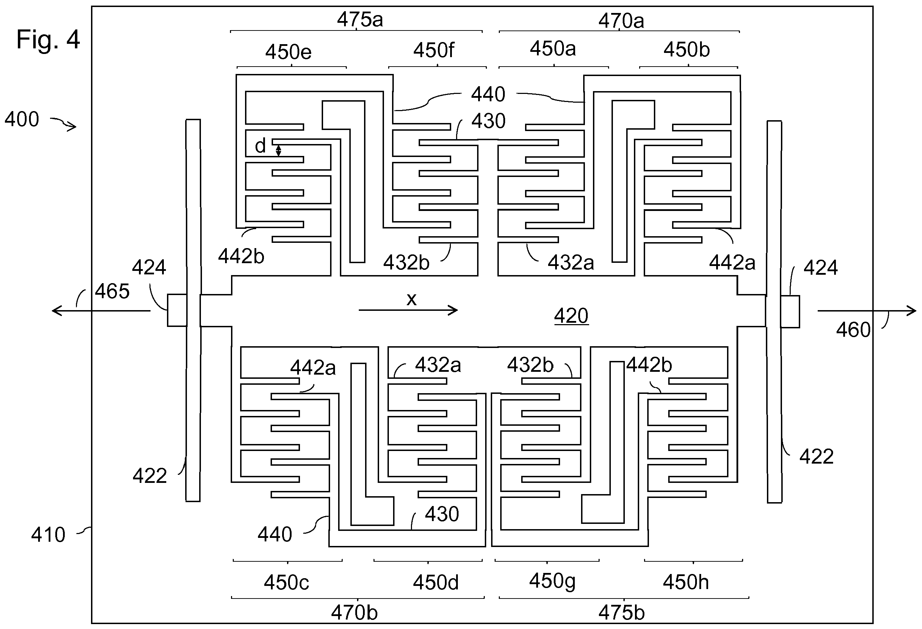

In Fig. 1 sind die Anregeelektroden 130 und die Detektionselektroden 140 derart dargestellt, dass sie Plattenkondensatoren bilden. Gemäß weiteren Ausführungsformen können die Elektroden aber auch in Form von Kammelektroden mit verzahnten Elektrodenfingern oder in jeder anderen Form ausgebildet sein (vgl. Fig.4 unten).

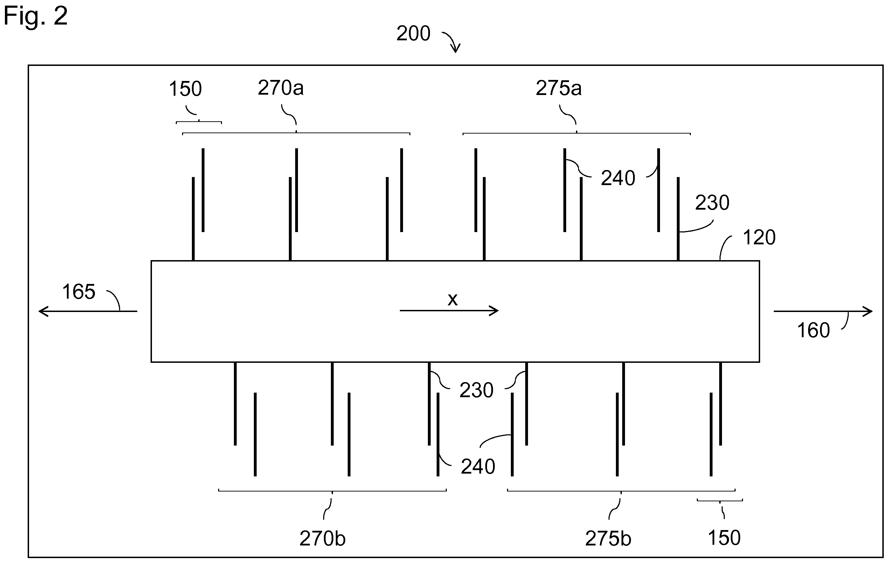

Fig. 2 zeigt einen Beschleunigungssensor 200 gemäß einer weiteren Ausführungsform.

Der Beschleunigungssensor 200 unterscheidet sich von dem Beschleunigungssensor 100 aus Fig. 1 dadurch, dass Paarungen 150 von Anregeelektroden 230 und Detektionselektroden 240, die zur ersten Gruppe und die zur zweiten Gruppe gehören, derart angeordnet sind, dass sie zumindest zwei Untergruppen 270a, 270b der ersten Gruppe und zumindest zwei Untergruppen 275a, 275b der zweiten Gruppe bilden. Das heißt, die Paarungen 150 der Untergruppen 270a, 270b der ersten Gruppe lenken die Anregemasse 120 entlang der ersten Richtung 160 aus und die Paarungen 150 der Untergruppen 275a, 275b der zweiten Gruppe lenken die Anregemasse 120 entlang der zweiten Richtung 165 aus.

In den einzelnen Untergruppen 270a, 270b, 275a, 275b sind die Paarungen 150 von Anregeelektroden 230 und Detektionselektroden 240 nebeneinander angeordnet, ohne dass sie von Paarungen 150 der jeweils anderen Gruppe getrennt werden. Wie in Fig. 2 gezeigt, können zum Beispiel drei Paarungen 150 der ersten Gruppe nebeneinander angeordnet sein und die Untergruppe 270a der ersten Gruppe bilden. Daran anschließend sind drei Paarungen 150 der zweiten Gruppe angeordnet, die die Untergruppe 275a der zweiten Gruppen bilden. Genauso sind auf der gegenüberliegenden Seite der Anregemasse 120 Untergruppen 270b, 275b der ersten und zweiten Gruppe angeordnet, die nicht von Paarungen 150 von Anregeelektroden 230 und Detektionselektroden 240 der jeweils anderen Gruppe unterbrochen sind.

Dadurch sind Paarungen 150, die die Anregemasse 120 in die gleiche Richtung auslenken, nebeneinander angeordnet, wodurch die Fertigung des Beschleunigungssensors 200 mit mittleren Spaltabständen der ersten Gruppe, die den mittleren Spaltabständen der zweiten Gruppe entsprechen, erleichtert werden kann.

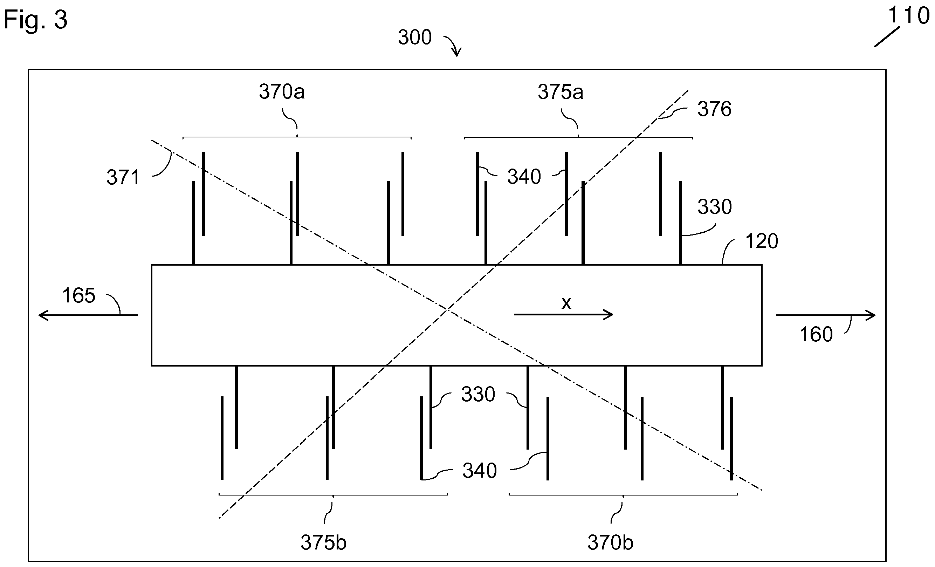

Fig. 3 zeigt einen Beschleunigungssensor 300 gemäß einer weiteren Ausführungsform.

Wie bei den Beschleunigungssensoren 100, 200 der Fig. 1 und 2 weist auch der Beschleunigungssensor 300 das Substrat 110 sowie die entlang einer Bewegungsachse x bewegliche Anregemasse 120 auf.

Der Beschleunigungssensor 300 unterscheidet sich von dem Beschleunigungssensor 200 aus Fig. 2 dadurch, dass Untergruppen 370a, 370b der ersten Gruppe überkreuz zu Untergruppen 375a, 375b der zweiten Gruppe angeordnet sind. Wie in Fig. 3 dargestellt, überkreuzen sich eine virtuelle erste Verbindungslinie 371, die Mittelpunkte der Untergruppen 370a, 370b der ersten Gruppe verbindet mit einer virtuellen zweiten Verbindungslinie 367, die Mittelpunkte der Untergruppen 375a, 375b der zweiten Gruppe verbindet. Die Mittelpunkte können hierbei als die Mittelpunkte der kleinsten Rechtecke definiert sein, von denen sämtliche Elektroden 330, 340 der jeweiligen Untergruppe 370 eingeschlossen sind. Die Mittelpunkte können auch beliebige Punkte innerhalb des Zwischenraums zwischen einer Paarung in der Mitte der betreffenden Untergruppe 370 sein. Die Mittelpunkte können aber auch beliebige Punkte zwischen zwei Paarungen innerhalb einer Untergruppe 370 sein, die zunächst dem Ende der Anregemasse 120 angeordnet sind.

Durch diese Anordnung wird gewährleistet, dass bei der Fertigung des Beschleunigungssensors 300 der gemittelte Abstand zwischen den Anregeelektroden 330 und Detektionselektroden 340 der ersten Gruppe automatisch dem gemittelten Abstand von Anregeelektroden 330 und Detektionselektroden 340 der zweiten Gruppe entspricht. So werden zum Beispiel, wenn während des Ätzens der Anregemasse 120, der Anregeelektroden 330 und der Detektionselektroden 340 aus dem Substrat 110 eine Ätzflüssigkeit über dem Substrat 110 derart verläuft, dass die Dicke der Ätzflüssigkeit in der rechten oberen Ecke des Substrats 110 am höchsten und in der linken unteren Ecke des Substrats 110 am niedrigsten ist, auf Grund der unterschiedlichen Einwirkzeiten die Abstände zwischen den Anregeelektroden 330 und den Detektionselektroden 340 der Untergruppe 375a, die sich am nächsten an der rechten oberen Ecke befindet, am größten sein, während die Abstände zwischen den Anregeelektroden 330 und den Detektionselektroden 340 der Untergruppe 375b, die sich am nächsten der linken unteren Ecke des Substrats 110 befindet, am kleinsten sein werden. Die Abstände der Anregeelektroden 330 und der Detektionselektroden 340 der Untergruppen 370a und 370b sind hingegen ungefähr gleich und entsprechen dem gemittelten Spaltabstand der beiden Untergruppen 375a, 375b. Da die Untergruppen 370a und 370b zusammen die erste Gruppe und die Untergruppen 375a und 375b zusammen die zweite Gruppe bilden, ist gewährleistet, dass der gemittelte Abstand der Elektroden 330, 340 der ersten Gruppe näherungsweise oder exakt gleich dem gemittelten Abstand der Elektroden 330, 340 der zweiten Gruppe ist.

Ebenso ist bei jedem anderen Verlauf des Gradienten der Ätzflüssigkeitshöhe und damit des Verlaufs der Ätztiefe durch die Anordnung der Untergruppen 370a, 370b der ersten Gruppe und der Untergruppen 375a, 375b der zweiten Gruppe gewährleistet, dass sich die gemittelten Abstände der Elektroden der ersten Gruppe und der Elektroden der zweiten Gruppe gleichen. Somit kann ein Beschleunigungssensor mit reduziertem Bias trotz Trending und ohne besondere Fertigungstechnik hergestellt werden.

Fig. 4 zeigt einen Beschleunigungssensor 400 gemäß einer weiteren Ausführungsform.

Der Beschleunigungssensor 400 weist ein Substrat 410 auf, auf dem Ankerstrukturen 424 ausgebildet sind, die über Federelemente 422 eine Anregemasse 420 derart über dem Substrat 410 halten, dass die Anregemasse 420 entlang einer Bewegungsachse x, die der Längsrichtung des in Fig. 4 gezeigten Anregemasse 420 entspricht, beweglich ist. Dies kann zum Beispiel dadurch gewährleistet sein, dass die Federelemente 422 als Federn, z.B. Biege-Balken-Federn, ausgebildet sind, die entlang der Bewegungsachse x, d.h. entlang der ersten Richtung 460 und der zweiten Richtung 465 verformbar sind, jedoch entlang anderer Richtungen, d.h. senkrecht zur Zeichenebene und nach oben und unten, steif sind.

Mit der Anregemasse 420 sind Anregeelektroden 430 verbunden, die als Kammelektroden mit Elektrodenfingern 432 ausgebildet sind. In die Elektrodenfinger 432 der Anregeelektroden 430 greifen Elektrodenfinger 442 von als Kammelektroden ausgebildeten Detektionselektroden 440 ein, die fest mit dem Substrat 410 verbunden sind. Durch die Ausgestaltung der Elektroden als Kammelektroden anstatt als Elektrodenplatten können eine genauere Steuerung des Beschleunigungssensors 400 und damit eine größere Messgenauigkeit erreicht werden, da die durch die verzahnten Kammelektroden erzeugte Kraft unabhängig von der Auslenkung der Anregemasse 420 ist. Zudem werden durch die Kammelektrodenstruktur unerwünschte Effekte auf das aus Anregemasse 420 und Federelementen 422 bestehende Schwingungssystem, wie etwa eine Veränderung der Federkonstanten der Federelemente 422, verhindert.

Wie in Fig. 4 dargestellt, können Dämpfelektroden 445 zwischen den Anregeelektroden 430 und den Detektionselektroden 440 vorgesehen sein. Die Dämpfelektroden 445 dienen einer Dämpfung einer durch die Anregeelektroden 430 und Detektionselektroden 440 angeregten Schwingung der Anregemasse 420. Bei einer weiteren Ausführungsform sind keine Dämpfelektroden 445 vorhanden.

Die Anregeelektroden 430 und die Detektionselektroden 440 sind dazu geeignet, die Anregemasse 420 entlang einer ersten Richtung 460 und entlang einer der ersten Richtung 460 entgegengesetzten zweiten Richtung 465 auszulenken. Dazu werden die Anregeelektroden 430 und die Detektionselektroden 440 auf verschiedene elektrische Potentiale gelegt, so dass durch das zwischen den Elektroden entstehende elektrische Feld über die Anregeelektroden 430 Kräfte auf die Anregemasse 420 erzeugt werden können.

Die Anregeelektroden 430 und die Detektionselektroden 440 sind dabei einander zugeordnet und bilden Paarungen 450. Dabei sind diejenigen Anregeelektroden 430 und Detektionselektroden 440 einander zugeordnet, deren Elektrodenfinger 432, 442 miteinander verzahnt sind. Wie in Fig. 4 gezeigt können auch mehrere Anregeelektroden 430 zu einer einzelnen Elektrode kombiniert sein. Bei einer weiteren Ausführungsform sind alle Anregeelektroden 430 als separate Elektroden ausgebildet.

Je nach Richtung der Elektrodenfinger der Kammelektroden bilden die Anregeelektroden 430 und die Detektionselektroden 440 Elektrodenpaarungen 450, die die Anregemasse 420 in die erste Richtung 460 oder die zweite Richtung 465 auslenken. So bilden die Paarungen 450a, 450b, 450c, 450d eine erste Gruppe von Paarungen von Anregeelektroden 430 und Detektionselektroden 440 und die Paarungen 450e, 450f, 450g, 450h bilden eine zweite Gruppe von Paarungen von Anregeelektroden 430 und Detektionselektroden 440. Die erste Gruppe ist in zwei Untergruppen 470a, 470b aufgeteilt und die zweite Gruppe ist in zwei Untergruppen 475, 475b der zweiten Gruppe aufgeteilt. Die Untergruppen 470a, 470b der ersten Gruppe liegen überkreuz zu den Untergruppen 475a, 475b der zweiten Gruppe.

Die Elektrodenfinger 432a der Anregeelektroden 430 der ersten Gruppen erstrecken sich entlang der ersten Richtung 460, die Elektrodenfinger 442a der Detektionselektroden 440 der ersten Gruppe erstrecken sich in die zweite Richtung 465, die Elektrodenfinger 432b der Anregeelektroden 430 der zweiten Gruppe erstrecken sich entlang der zweiten Richtung 465 und die Elektrodenfinger 442b der Detektionselektroden 440 der zweiten Gruppe erstrecken sich entlang der ersten Richtung 460. Ein Abstand d zwischen Anregeelektroden 430 und Detektionselektroden 440 wird durch den Abstand zwischen den Elektrodenfingern 432, 442 der jeweiligen Anregeelektroden 430 und Detektionselektroden 440 bestimmt.

Der Beschleunigungssensor 400 wird durch Ätzen der einzelnen Bauteile aus dem Substrat 410 hergestellt. Während des Ätzens ist es möglich, dass das Substrat 410 sich um wenige Grad, bzw. um Bruchteile eines Grads neigt, so dass das Substrat mit der Horizontalen einen Neigungswinkel einschließt. Eine zum Ätzen benutzte Ätzflüssigkeit wird dann auf dem Substrat 410 derart verlaufen, dass die Oberfläche der Ätzflüssigkeit nahezu horizontal liegt und deshalb einen Neigungswinkel mit der Oberfläche des Substrats 410 einschließt. Dadurch ist die Dicke der Ätzflüssigkeit auf dem Substrat 410 unterschiedlich und verschiedene Ätztiefen und Breiten werden in Abhängigkeit von der Höhe der Ätzflüssigkeit erzeugt.

Ist das Substrat 410 zum Beispiel entlang einer Diagonalen von links oben nach rechts unten leicht geneigt, so wird die Höhe der über dem Substrat 410 stehenden Ätzflüssigkeit in der rechten oberen Ecke höher sein als in der linken unteren Ecke des Substrats 410. Dadurch wird die Ätztiefe in der linken unteren Ecke niedriger sein als die Ätztiefe in der rechten oberen Ecke, sodass der Abstand d zwischen den Anregeelektroden 430 und den Detektionselektroden 440 in der linken unteren Ecke kleiner sein wird als in der rechten oberen Ecke. Der Abstand der Anregeelektroden 430 zu den Detektionselektroden 440 wird entlang der von der rechten unteren Ecke zur linken oberen Ecke führenden Diagonalen nahezu gleich sein und dem gemittelten Abstand der Anregeelektroden 430 und der Detektionselektroden 440 der Untergruppen 470a, 470b der ersten Gruppe entsprechen. Genauso werden sich bei einem anderen Verlauf des Ätzflüssigkeitsstandes über dem Substrat 410 die gemittelten Abstände zwischen Anregeelektroden 430 und Detektionselektroden 440 der ersten Gruppe den gemittelten Abständen der Anregeelektroden 430 und Detektionselektroden 440 der zweiten Gruppe entsprechen. Dadurch wird gewährleistet, dass bei der Fertigung des Beschleunigungssensors 400 nicht auf ein Verlaufen der Ätzflüssigkeit geachtet werden muss und trotzdem ein Beschleunigungssensor mit reduziertem Bias hergestellt werden kann.

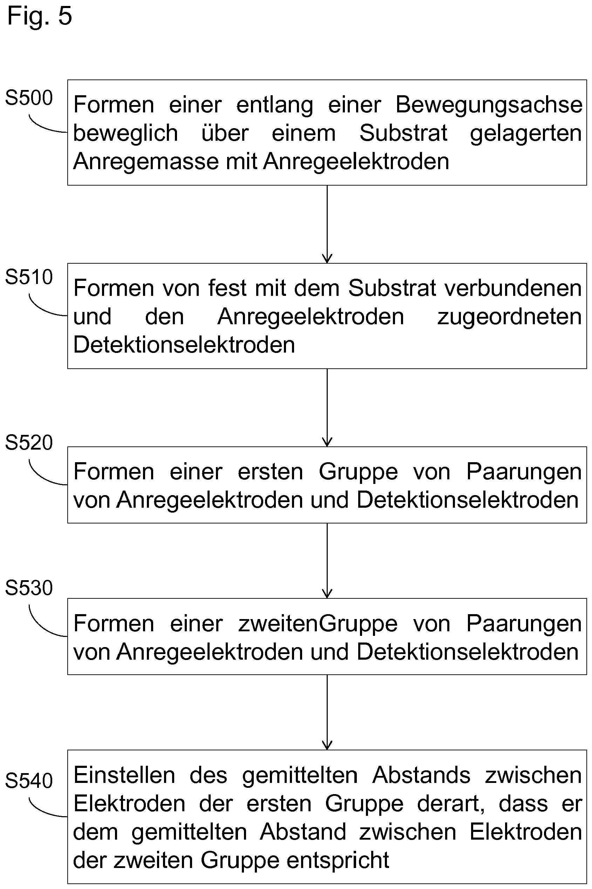

Fig. 5 zeigt ein Flussdiagramm für ein Verfahren zur Herstellung eines Beschleunigungssensors.

Bei S500 wird eine entlang einer Bewegungsachse x beweglich über einem Substrat gelagerte Anregemasse mit Anregeelektroden geformt.

Bei S510 werden fest mit dem Substrat verbundene, den Anregeelektroden zugeordnete Detektionselektroden geformt.

Bei S520 wird eine erste Gruppe von Paarungen von Anregeelektroden und zugeordneten Detektionselektroden geformt, die geeignet ist, die Anregemasse entlang der Bewegungsachse x in eine erste Richtung auszulenken.

Bei S530 wird eine zweite Gruppe von Paarungen von Anregeelektroden und zugeordneten Detektionselektroden geformt, die geeignet ist, die Anregemasse entlang der Bewegungsachse x in eine der ersten Richtung entgegengesetzte zweite Richtung auszulenken. Die Anzahl der Paarungen in der ersten Gruppe ist hierbei gleich der Anzahl der Paarungen in der zweiten Gruppe.

Bei S540 wird der gemittelte Abstand zwischen Anregeelektroden und Detektionselektroden der Paarungen der ersten Gruppe derart eingestellt, dass er dem gemittelten Abstand zwischen Anregeelektroden und Detektionselektroden der Paarungen der zweiten Gruppe entspricht.

Nach weiteren, nicht dargestellten Verfahren können Beschleunigungssensoren gemäß den oben beschriebenen Ausführungsformen hergestellt werden.

Dadurch ist es möglich, Beschleunigungssensoren herzustellen, in denen die von Anregeelektroden und Detektionselektroden der ersten Gruppe erzeugten Kräfte gleich der von Anregeelektroden und Detektionselektroden der zweiten Gruppe erzeugten Kräfte sind. Die Sensoren können deshalb einen reduzierten Bias aufweisen.

## Patentansprüche

1. Beschleunigungssensor (300), mit
einer Anregemasse (120) mit Anregeelektroden (330), die entlang einer Bewegungsachse (x) beweglich über einem Substrat (110) gelagert ist;
Detektionselektroden (340), die fest mit dem Substrat (110) verbunden sind und die den Anregeelektroden (330) zugeordnet sind; wobei
eine erste Gruppe von Paarungen von Anregeelektroden (330) und zugeordneten Detektionselektroden (340) geeignet ist, die Anregemasse (320) entlang der Bewegungsachse (x) in eine erste Richtung (160) auszulenken;
eine zweite Gruppe von Paarungen von Anregeelektroden (330) und zugeordneten Detektionselektroden (340) geeignet ist, die Anregemasse (320) entlang der Bewegungsachse (x) in eine der ersten Richtung (160) entgegengesetzte zweite Richtung (165) auszulenken;
die Anzahl der Paarungen in der ersten Gruppe gleich der Anzahl der Paarungen in der zweiten Gruppe ist;
die Anregeelektroden (330) und die Detektionselektroden (340) der ersten Gruppe von Paarungen und der zweiten Gruppe von Paarungen derart angeordnet sind, dass der aus den Einzelabständen ermittelte gemittelte Abstand zwischen Anregeelektroden (330) und Detektionselektroden (340) der Paarungen der ersten Gruppe dem aus den Einzelabständen ermittelten gemittelten Abstand zwischen Anregeelektroden (330) und Detektionselektroden (340) der Paarungen der zweiten Gruppe entspricht; indem die erste Gruppe wenigstens zwei Untergruppen (370a, 370b) von Paarungen aufweist;
die zweite Gruppe wenigstens zwei Untergruppen (375a, 375b) von Paarungen aufweist;
in den Untergruppen (370) Anregeelektroden (330) und Detektionselektroden (340) abwechselnd angeordnet sind;
eine virtuelle erste Verbindungslinie (371) zwischen Mittelpunkten der zwei Untergruppen (370a, 370b) der ersten Gruppe eine virtuelle zweite Verbindungslinie (376) zwischen Mittelpunkten der zwei Untergruppen (375a, 375b) der zweiten Gruppe kreuzt.

2. Beschleunigungssensor (400) nach einem der vorherigen Ansprüche, wobei
entlang der ersten Richtung (460) an einer zur Bewegungsachse (x) parallelen ersten Seite der Anregemasse (420) nacheinander wenigstens zwei Anregeelektroden (430) der ersten Gruppe und wenigstens zwei Anregeelektroden (430) der zweiten Gruppe angeordnet sind;
entlang der ersten Richtung (460) an einer zur Bewegungsachse (x) parallelen zweiten Seite der Anregemasse (420) nacheinander wenigstens zwei Anregeelektroden (430) der zweiten Gruppe und wenigstens zwei Anregeelektroden (430) der ersten Gruppe angeordnet sind; und wobei
die zwei an der ersten Seite der Anregemasse angeordneten Anregeelektroden der ersten Gruppe gegenüber den zwei an der zweiten Seite der Anregemasse angeordneten Anregeelektroden der zweiten Gruppe liegen.

3. Beschleunigungssensor (400) nach einem der vorherigen Ansprüche, wobei
die Anregeelektroden (430) und Detektionselektroden (440) Kammelektroden mit Elektrodenfingern (432, 442) entlang der Bewegungsachse (x) aufweisen;
die Elektrodenfinger (432a) der Anregeelektroden (430) der ersten Gruppe sich entlang der ersten Richtung (460) erstrecken;
die Elektrodenfinger (442a) der Detektionselektroden (440) der ersten Gruppe sich entlang der zweiten Richtung (465) erstrecken;
die Elektrodenfinger (432b) der Anregeelektroden (430) der zweiten Gruppe sich entlang der zweiten Richtung (465) erstrecken;
die Elektrodenfinger (442b) der Detektionselektroden der zweiten Gruppe sich entlang der ersten Richtung (460) erstrecken; und wobei
der Abstand (d) zwischen Anregeelektroden (430) und Detektionselektroden (440) durch den Abstand zwischen den Elektrodenfingern (432, 442) der jeweiligen Anregeelektroden (430) und Detektionselektroden (440) bestimmt ist.

4. Beschleunigungssensor (300)
nach einem der Ansprüche 1 bis 2, wobei die Paarungen von Anregeelektroden (330) und Detektionselektroden (340) Plattenkondensatoren bilden.

5. Beschleunigungssensor (400) nach einem der vorherigen Ansprüche, wobei der Beschleunigungssensor (400) eine mikro-elektro-mechanische Struktur ist.

6. Verfahren zur Herstellung eines Beschleunigungssensors (300), mit den Schritten
Formen einer entlang einer Bewegungsachse (x) beweglich über einem Substrat (110) gelagerten Anregemasse (120) mit Anregeelektroden (330); Formen von fest mit dem Substrat (110) verbundenen und den Anregeelektroden (330) zugeordneten Detektionselektroden (340); wobei
die Schritte aufweisen:
Formen einer ersten Gruppe von Paarungen von Anregeelektroden (330) und zugeordneten Detektionselektroden (340), die geeignet ist, die Anregemasse (320) entlang der Bewegungsachse (x) in eine erste Richtung (160) auszulenken;
Formen einer zweite Gruppe von Paarungen von Anregeelektroden (330) und zugeordneten Detektionselektroden (340), die geeignet ist, die Anregemasse (320) entlang der Bewegungsachse (x) in eine der ersten Richtung (160) entgegengesetzte zweite Richtung (165) auszulenken, wobei
die Anzahl der Paarungen in der ersten Gruppe gleich der Anzahl der Paarungen in der zweiten Gruppe ist;
die Anregeelektroden (330) und die Detektionselektroden (340) der ersten Gruppe von Paarungen und der zweiten Gruppe von Paarungen derart geformt werden, dass der aus den Einzelabständen ermittelte gemittelte Abstand zwischen Anregeelektroden (330) und Detektionselektroden (340) der Paarungen der ersten Gruppe dem aus den Einzelabständen ermittelten gemittelten Abstand zwischen Anregeelektroden (330) und Detektionselektroden (340) der Paarungen der zweiten Gruppe entspricht; indem
die erste Gruppe wenigstens zwei Untergruppen (370a, 370b) von Paarungen aufweist;
die zweite Gruppe wenigstens zwei Untergruppen (375a, 375b) von Paarungen aufweist;
in den Untergruppen (370) Anregeelektroden (330) und Detektionselektroden (340) abwechselnd angeordnet sind;
eine virtuelle erste Verbindungslinie (371) zwischen Mittelpunkten der zwei Untergruppen (370a, 370b) der ersten Gruppe eine virtuelle zweite Verbindungslinie (376) zwischen Mittelpunkten der zwei Untergruppen (375a, 375b) der zweiten Gruppe kreuzt.

## Claims

1. An acceleration sensor (300) comprising:
an excitation mass (120) having excitation electrodes (330), which excitation mass is mounted moveably along a movement axis (x) above a substrate (110);
detection electrodes (340) that are fixedly connected to the substrate (110) and that correspond to the excitation electrodes (330); wherein
a first group of pairings of excitation electrodes (330) and corresponding detection electrodes (340) is configured to deflect the excitation mass (320) along the movement axis (x) in a first direction (160);
a second group of pairings of excitation electrodes (330) and corresponding detection electrodes (340) is configured to deflect the excitation mass (320) along the movement axis (x) in a second direction (165) that is opposite to the first direction (160);
the number of pairings in the first group is equal to the number of parings (150) in the second group;
the excitation electrodes (330) and the detection electrodes (340) of the first group of pairings and of the second group of pairings are arranged such that the averaged distance between excitation electrodes (330) and detection electrodes (340) of pairings of the first group, which is determined from distances of the respective pairing, corresponds to the averaged distance between excitation electrodes (330) and detection electrodes (340) of pairings of the second group, which is determined from distances of the respective pairing; by arranging the groups such that
the first group comprises at least two subgroups (370a, 370b) of pairings;
the second group comprises at least two subgroups (375a, 375b) of pairings;
in the subgroups (370) excitation electrodes (330) and detection electrodes (340) are arranged alternatingly;
a virtual first connecting line (371) between centers of the two subgroups (370a, 370b) of the first group crosses a virtual second connection line (376) between centers of the two subgroups (375a, 375b) of the second group.

2. The acceleration sensor (400) according to one of the preceding claims, wherein
at a first side of the excitation mass (420) that is parallel to the movement axis (x) there are consecutively arranged along the first direction (460) at least two excitation electrodes (430) of the first group and at least two excitation electrodes (430) of the second group;
at a second side of the excitation mass (420) that is parallel to the movement axis (x) there are consecutively arranged along the first direction (460) at least two excitation electrodes (430) of the second group and at least two excitation electrodes (430) of the first group; and wherein
the two excitation electrodes of the first group arranged at the first side of the excitation mass are opposite to the two excitation electrodes of the second group arranged at the second side of the excitation mass.

3. The acceleration sensor (400) according to one of the preceding claims, wherein
the excitation electrodes (430) and the detection electrodes (440) comprise comb electrodes having electrode fingers (432, 442) extending along the movement axis (x);
the electrode fingers (432a) of the excitation electrodes (430) of the first group extend along the first direction (460);
the electrode fingers (442a) of the detection electrodes (440) of the first group extend along the second direction (465);
the electrode fingers (432b) of the excitation electrodes (430) of the second group extend along the second direction (465);
the electrode fingers (442b) of the detection electrodes of the second group extend along the first direction (460); and wherein
the distance (d) between excitation electrodes (430) and detection electrodes (440) is defined by the distance between the electrode fingers (432, 442) of the corresponding excitation electrodes (430) and detection electrodes (440).

4. The acceleration sensor (300) according to one of claims 1 to 4, wherein the pairings of excitation electrodes (330) and detection electrodes (340) form plate capacitors.

5. The acceleration sensor (400) according to one of the preceding claims, wherein the acceleration sensor (400) is a micro-electro-mechanical structure.

6. A method for manufacturing an acceleration sensor (300) comprising the steps:
forming of an excitation mass (120) having excitation electrodes (330), which excitation mass (320) is mounted moveably along a movement axis (x) above a substrate (110);
forming of detection electrodes (340) that are fixedly connected with the substrate (110) and that correspond to the excitation electrodes (330); wherein
the steps comprise:
forming of a first group of pairings of excitation electrodes (330) and corresponding detection electrodes (340) that is configured to deflect the excitation mass (320) along the movement axis (x) in a first direction (160);
forming of a second group of pairings of excitation electrodes (330) and corresponding detection electrodes (340) that is configured to deflect the excitation mass (320) along the movement axis (x) in a second direction (165) that is opposite to the first direction (160), wherein
the number of pairings in the first group is equal to the number of parings in the second group;
the excitation electrodes (330) and the detection electrodes (340) of the first group of pairings and of the second group of pairings are formed such that the averaged distance between excitation electrodes (330) and detection electrodes (340) of pairings of the first group, which is determined from distances of the respective pairing, corresponds to the averaged distance between excitation electrodes (330) and detection electrodes (340) of the pairings of the second group, which is determined from distances of the respective pairing; by forming the groups such that
the first group comprises at least two subgroups (370a, 370b) of pairings;
the second group comprises at least two subgroups (375a, 375b) of pairings;
in the subgroups (370) excitation electrodes (330) and detection electrodes (340) are arranged alternatingly;
a virtual first connecting line (371) between centers of the two subgroups (370a, 370b) of the first group crosses a virtual second connection line (376) between centers of the two subgroups (375a, 375b) of the second group.

## Revendications

1. Capteur d'accélération (300) avec
une masse d'excitation (120), pourvue d'électrodes d'excitation (330), qui est montée mobile le long d'un axe de déplacement (x) sur un substrat (110) ;
des électrodes de détection (340) qui sont reliées de manière fixe au substrat (110) et qui sont associées aux électrodes d'excitation (330) ;
un premier groupe d'appariements d'électrodes d'excitation (330) et d'électrodes de détection (340) associées étant apte à dévier dans une première direction (160) la masse d'excitation (320) le long de l'axe de déplacement (x) ;
un second groupe d'appariements d'électrodes d'excitation (330) et d'électrodes de détection (340) associées étant apte à dévier dans une seconde direction (165), opposée à la première direction (160), la masse d'excitation (320) le long de l'axe de déplacement (x) ;
le nombre d'appariements dans le premier groupe étant égal au nombre d'appariements dans le second groupe ;
les électrodes d'excitation (330) et les électrodes de détection (340) du premier groupe d'appariements et du second groupe d'appariements étant disposées de telle sorte que l'écartement moyen, déterminé à partir des écartements individuels, entre les électrodes d'excitation (330) et les électrodes de détection (340) des appariements du premier groupe corresponde à l'écartement moyen, déterminé à partir des écartements individuels, entre les électrodes d'excitation (330) et les électrodes de détection (340) des appariements du second groupe ; grâce au fait que
le premier groupe comporte au moins deux sous-groupes (370a, 370b) d'appariements ;
le second groupe comporte au moins deux sous-groupes (375a, 375b) d'appariements ;
dans les sous-groupes (370) les électrodes d'excitation (330) et les électrodes de détection (340) sont disposées en alternance ;
une première ligne de liaison virtuelle (371) entre les centres des deux sous-groupes (370a, 370b) du premier groupe croise une seconde ligne de liaison virtuelle (376) entre les centres des deux sous-groupes (375a, 375b) du second groupe.

2. Capteur d'accélération (400) selon l'une des revendications précédentes, dans lequel
le long de la première direction (460), au moins deux électrodes d'excitation (430) du premier groupe et au moins deux électrodes d'excitation (430) du second groupe sont disposées successivement sur un premier côté, parallèle à l'axe de déplacement (x), de la masse d'excitation (420) ;
le long de la première direction (460), au moins deux électrodes d'excitation (430) du second groupe et au moins deux électrodes d'excitation (430) du premier groupe sont disposées successivement sur un second côté, parallèle à l'axe de déplacement (x), de la masse d'excitation (420) ; et
les deux électrodes d'excitation du premier groupe qui sont disposées sur le premier côté de la masse d'excitation se trouvent en face des deux électrodes d'excitation du second groupe qui sont disposées sur le second côté de la masse d'excitation.

3. Capteur d'accélération (400) selon l'une des revendications précédentes, dans lequel
les électrodes d'excitation (430) et les électrodes de détection (440) comportent des électrodes en forme de peignes avec des dents (432, 442) le long de l'axe de déplacement (x) ;
les dents (432a) des électrodes d'excitation (430) du premier groupe s'étendent le long de la première direction (460) ;
les dents (442a) des électrodes de détection (440) du premier groupe s'étendent le long de la seconde direction (465) ;
les dents (432b) des électrodes d'excitation (430) du second groupe s'étendent le long de la seconde direction (465) ;
les dents (442b) des électrodes de détection du second groupe s'étendent le long de la première direction (460) ; et
l'écartement (d) entre les électrodes d'excitation (430) et les électrodes de détection (440) est défini par l'écartement entre les dents (432, 442) des électrodes d'excitation (430) et des électrodes de détection (440) respectives.

4. Capteur d'accélération (300) selon l'une des revendications 1 à 2, dans lequel les appariements d'électrodes d'excitation (330) et des électrodes de détection (340) forment des condensateurs plaquettes.

5. Capteur d'accélération (400) selon l'une des revendications précédentes, ledit capteur d'accélération (400) étant une structure micro-électromécanique.

6. Procédé pour fabriquer un capteur d'accélération (300), avec les étapes de
formation d'une masse d'excitation (120), pourvue d'électrodes d'excitation (330), montée mobile le long d'un axe de déplacement (x) sur un substrat (110) ;
formation d'électrodes de détection (340) reliées de manière fixe au substrat (110) et associées aux électrodes d'excitation (330) ;
ces étapes comprenant :
la formation d'un premier groupe d'appariements d'électrodes d'excitation (330) et d'électrodes de détection (340) associées qui est apte à dévier dans une première direction (160) la masse d'excitation (320) le long de l'axe de déplacement (x) ;
la formation d'un second groupe d'appariements d'électrodes d'excitation (330) et d'électrodes de détection (340) associées qui est apte à dévier dans une seconde direction (165), opposée à la première direction (160), la masse d'excitation (320) le long de l'axe de déplacement (x) ;
le nombre d'appariements dans le premier groupe étant égal au nombre d'appariements dans le second groupe ;
les électrodes d'excitation (330) et les électrodes de détection (340) du premier groupe d'appariements et du second groupe d'appariements étant disposées de telle sorte que l'écartement moyen, déterminé à partir des écartements individuels, entre les électrodes d'excitation (330) et les électrodes de détection (340) des appariements du premier groupe corresponde à l'écartement moyen déterminé à partir des écartements individuels, entre les électrodes d'excitation (330) et les électrodes de détection (340) des appariements du second groupe ; grâce au fait que
le premier groupe comporte au moins deux sous-groupes (370a, 370b) d'appariements ;
le second groupe comporte au moins deux sous-groupes (375a, 375b) d'appariements ;
dans les sous-groupes (370) les électrodes d'excitation (330) et les électrodes de détection (340) sont disposées en alternance ;
une premier ligne de liaison virtuelle (371) entre les centres des deux sous-groupes (370a, 370b) du premier groupe croise une seconde ligne de liaison virtuelle (376) entre les centres des deux sous-groupes (375a, 376b) du second groupe.
